# EUROPÄISCHE PATENTSCHRIFT

(11) **EP 3 955 760 B1**
(45) Veröffentlichungstag und Bekanntmachung des Hinweises auf die Patenterteilung: **28.08.2024**
(21) Anmeldenummer: 20712526.1
(22) Anmeldetag: 17.03.2020
(51) Int. Cl.: A24F 40/70, A24F 40/10, A24F 40/44, A24F 40/46, H01L 23/00, A61M 15/06

(54) **VERFAHREN ZUR HERSTELLUNG EINER VERDAMPFERVORRICHTUNG, VERDAMPFERVORRICHTUNG UND INHALATOR, VORZUGSWEISE ELEKTRONISCHES ZIGARETTENPRODUKT**
METHOD FOR PRODUCING A VAPORIZING DEVICE, VAPORIZING DEVICE AND INHALER, PREFERABLY AN ELECTRONIC CIGARETTE PRODUCT
PROCÉDÉ DE FABRICATION D'UN DISPOSITIF ÉVAPORATEUR, DISPOSITIF ÉVAPORATEUR ET INHALATEUR, DE PRÉFÉRENCE PRODUIT DE CIGARETTE ÉLECTRONIQUE

(30) Priorität: 15.04.2019 DE 102019109883
(43) Veröffentlichungstag der Anmeldung: 23.02.2022
(73) Patentinhaber: Körber Technologies GmbH, 21033 Hamburg (DE)
(72) Erfinder: BOHNE, Sven, 22297 Hamburg (DE); BORN, André, 21465 Neuschönningstedt (DE); TRIEU, Hoc Khiem, 21394 Westergellersen (DE)
(74) Vertreter: Müller Verweyen
(86) Internationale Anmeldenummer: PCT/EP2020/057257
(87) Internationale Veröffentlichungsnummer: WO 2020/212050

(56) Entgegenhaltungen:
- EP-A2- 2 892 373
- US-A- 5 573 692
- US-A- 5 649 554
- US-A1- 2018 015 385

## Beschreibung

Die vorliegende Erfindung betrifft ein Verfahren zur Herstellung einer Verdampfervorrichtung für einen Inhalator, vorzugsweise für ein elektronisches Zigarettenprodukt, mit mindestens einem elektrischen Verdampfer, wenigstens einer elektrischen Leitung zur Versorgung des Verdampfers mit elektrischem Strom, und einem Träger zum Tragen des Verdampfers. Die Erfindung betrifft auch eine Verdampfervorrichtung und einen Inhalator, vorzugsweise ein elektronisches Zigarettenprodukt.

Herkömmliche elektronische Zigarettenprodukte beziehungsweise Inhalatoren basieren auf der Docht-Wendel-Technologie. Durch Kapillarkräfte wird die Flüssigkeit aus dem Flüssigkeitsspeicher entlang eines Dochts so weit transportiert, bis die Flüssigkeit durch eine elektrisch beheizbare Wendel erhitzt und somit verdampft wird. Der Docht dient als flüssigkeitsleitende Verbindung zwischen dem Flüssigkeitsspeicher und der als Verdampfer dienenden Heizwendel.

Ein Nachteil der Docht-Wendel-Technologie ist, dass eine mangelnde Versorgung von Flüssigkeit zu einer lokalen Überhitzung führt, wodurch Schadstoffe entstehen können. Diesen sogenannte "Dry Puff" gilt es zu vermeiden. Zudem sind derartige Verdampfereinheiten fertigungsbedingt oft undicht, so dass Flüssigkeit auf unerwünschte Weise, zum Beispiel über die Luftzuführung und/oder Dampfabführung, austreten kann.

Um die Probleme der Docht-Wendel-Technologie zu vermeiden, wird auf gattungsgemäße Verdampfer zurückgegriffen, die sich der in DE 10 2017 111 119 A1 offenbarten Technologie bedienen. Dabei wird die Flüssigkeit durch Kapillarkräfte von einer Dochtstruktur aus dem Flüssigkeitsspeicher zu einer Einlassseite des Verdampfers transportiert. Der Verdampfer verdampft die Flüssigkeit und die verdampfte Flüssigkeit ist als Dampf und/oder Aerosol einem Luftstrom zugebbar. Der Verdampfer ist zur Versorgung mit elektrischer Energie elektrisch mit einem Energiespeicher über die elektrische Leitung verbindbar. Die elektrische und/oder mechanische Anbindung beziehungsweise Kontaktierung des Verdampfers an beispielsweise die elektrische Leitung und/oder den Träger ist im zitierten Stand der Technik jedoch nicht beschrieben.

EP 2 892 373 A2 offenbart ein Verfahren und eine Vorrichtung nach dem Oberbegriff der Ansprüche 1 und 4.

US 5 573 692 A, US 5 649 554 A und US 2018/015385 A offenbaren weitere Verfahren zur Herstellung einer Verdaqmpfervorrichtung.

Es ist die Aufgabe der Erfindung eine verbesserte, insbesondere hochtemperaturstabile und möglichst niederohmige Kontaktierung des Verdampfers bereitzustellen.

Die Erfindung löst die Aufgabe mit den Merkmalen der unabhängigen Ansprüche.

Erfindungsgemäß umfasst das Verfahren ein Aufbringen eines elektrisch leitfähigen Klebstoffs zwischen dem Verdampfer und dem Träger, um eine elektrische Verbindung des Verdampfers mit der elektrischen Leitung herzustellen, wobei ein zusätzlicher Ausheizschritt zur Schaffung einer eutektischen Verbindung zwischen dem Verdampfer und dem Klebstoff durchgeführt wird. Die Erfindung hat erkannt, dass der elektrisch leitfähige Klebstoff zwischen dem Verdampfer und dem Träger sowohl die mechanische Anbindung des Verdampfers an den Träger auch unter thermischer Wechselbeanspruchung unterstützt bzw. bereitstellt, und gleichzeitig eine elektrische Verbindung mit der elektrischen Leitung herstellt. Dabei ermöglicht der elektrisch leitfähige Klebstoff eine effektive Herstellung der Verdampfervorrichtung.

Durch den erfindungsgemäßen zusätzlichen Ausheizschritt geht der Klebstoff in einem Kontaktbereich mit dem Verdampfer eine eutektische Verbindung ein, die niederohmiger ist als eine allein durch Klebung und gegebenenfalls Aushärten hergestellte Verbindung. Die eutektische Verbindung zwischen dem Verdampfer und dem Klebstoff ist eine Verbindung, bei der Materialien, aus denen der Verdampfer und der Klebstoff bestehen, eine eutektische Legierung miteinander bilden. Der elektrische Widerstand der eutektischen Verbindung kann über ihre Zusammensetzung gezielt eingestellt werden, was eine reproduzierbare elektrische Anbindung des Verdampfers an die elektrische Leitung ermöglicht (Heizerchipbondig). Der erfindungsgemäße Ausheizschritt kann insbesondere zusätzlich zu typischen Heizschritten zur Aushärtung des Klebstoffs sein.

Vorzugsweise wird der zusätzliche Ausheizschritt bei einer Temperatur von mindestens 400 °C, vorzugsweise mindestens 550 °C, weiter vorzugsweise mindestens 700 °C durchgeführt, um die eutektische Verbindung zuverlässig herstellen zu können, deren eutektischer Punkt einer Temperatur entspricht, der über der bei der Verdampfung auftretenden Temperaturen liegt und gleichzeitig niedrig genug, dass bei dem Ausheizschritt keine Komponente der Verdampfervorrichtung beschädigt wird. In einem Ausführungsbeispiel mit einem siliziumhaltigen Verdampfer und einem silberhaltigen Klebstoff wird der zusätzliche Ausheizschritt bei einer Temperatur von wenigstens 800 °C, beispielsweise etwa 845 °C durchgeführt. Die dem eutektischen Punkt zur Bildung der eutektischen Verbindung entsprechende Temperatur, die beim Ausheizschritt angewandt wird, kann durch eine auf dem Verdampfer aufgebrachte Metallschicht beeinflusst werden.

Bevorzugt erfolgt vor dem zusätzlichen Ausheizschritt eine thermische Aushärtung des Klebstoffs für mindestens 30 Minuten, vorzugsweise mindestens 60 Minuten und/oder bei einer Temperatur im Bereich zwischen 150 °C und 290 °C, damit der Verdampfer mit der elektrischen Leitung elektrisch verbunden werden kann beziehungsweise die elektrische Verbindung zwischen Verdampfer und der elektrischen Leitung vorbereitet werden kann, bevor die eutektische Verbindung hergestellt wird. Damit kann vor dem Herstellen der eutektischen Verbindung insbesondere die Positionierung des Verdampfers sichergestellt werden. Temperaturbedingte mechanische Spannungen, die bei der Herstellung der Verdampfervorrichtung zwischen dem Verdampfer, dem Träger und/oder der elektrischen Leitung entstehen können, können so minimiert werden. Gegenüber dem Ausheizschritt ist die für die Aushärtung anzuwendende Temperatur je nach Klebstoff und/oder Material des Verdampfers wie auch den vorteilhaften Ausführungsformen zu entnehmen klar abgrenzbar.

Die Erfindung betrifft auch eine Verdampfervorrichtung für einen Inhalator, vorzugsweise für ein elektronisches Zigarettenprodukt, umfassend mindestens einen elektrischen Verdampfer zum Verdampfen von dem Verdampfer zugeführter Flüssigkeit, wenigstens eine elektrische Leitung zur Versorgung des Verdampfers mit elektrischem Strom, und einen Träger, der den Verdampfer hält und in oder auf dem die elektrische Leitung angeordnet ist.

Gemäß der Erfindung wird vorgeschlagen, dass ein elektrisch leitfähiger Klebstoff zwischen dem Verdampfer und dem Träger vorgesehen ist, der eine elektrische Verbindung des Verdampfers mit der elektrischen Leitung herstellt. Der zwischen dem Verdampfer und dem Träger vorgesehene Klebstoff vermindert Probleme durch temperaturbedingte mechanische Spannungen zwischen dem Verdampfer und der elektrischen Leitung beziehungsweise dem Träger, die aufgrund der verschiedenen Wärmeausdehnungskoeffizienten der verschiedenen dem Verdampfer, der elektrischen Leitung beziehungsweise dem Träger zugrunde liegenden Werkstoffe beim Erhitzen auf Betriebstemperatur des Verdampfers und Abkühlen auf Raumtemperatur entstehen können.

Erfindungsgemäß ist zwischen dem Verdampfer und dem Klebstoff eine eutektische Verbindung gebildet. Damit ist die elektrische Verbindung zwischen dem Verdampfer und der elektrischen Leitung niederohmig, während der elektrische Kontakt zwischen dem Verdampfer und der elektrischen Leitung durch den Klebstoff ohne eutektische Verbindung hochohmig sein kann. Durch die eutektische Verbindung kann ein hochohmiger Kontaktwiderstand bzw. Übergangswiderstand zwischen dem Verdampfer und dem Klebstoff vermieden werden. Verglichen zu den bei der Verdampfung von Flüssigkeit in elektronischen Zigaretten auftretenden Temperaturen ist die eutektische Verbindung hochtemperaturstabil, da die dem eutektischen Punkt entsprechende Temperatur der eutektischen Verbindung über der Verdampfungstemperatur der Flüssigkeit liegt.

Erfindungsgemäß beinhaltet der Klebstoff Metall, um einen elektrisch leitfähigen und kosteneffektiven Klebstoff bereitzustellen. Insbesondere Silber ist dabei von Vorteil. Der silber- beziehungsweise metallhaltige Klebstoff ist temperaturstabil, was für die Anwendung für den Verdampfer vorteilhaft ist, da der Verdampfer im Betrieb zur Verdampfung der Flüssigkeit erwärmt wird. Das Metall und insbesondere das Silber begünstigt die Bildung der eutektischen Verbindung und kann effektiv mit der erfindungsgemäß kunststoffhaltigen Klebstoffbasis als elektrisch leitfähiger Klebstoff bereitgestellt und appliziert werden.

Vorzugsweise weist die eutektische Verbindung mehr als 50 Gewichts-%, vorteilhaft mehr als 65 Gewichts-%, noch weiter vorteilhaft mehr als 80 Gewichts-% Metall auf, da die eutektische Verbindung mit einem steigenden Metallanteil niederohmiger ist. Die eutektische Verbindung kann auch mehr als 95 Gewichts-% Metall umfassen, beispielsweise umfasst eine eutektische Verbindung aus Silber und Silizium etwa 97 Gewichts-% Silber, was einem Teilchenzahlanteil von etwa 89% Silber bedeutet.

Bevorzugt ist die elektrische Leitung wenigstens teilweise von dem leitfähigen Klebstoff gebildet, um den Träger auf eine effektive Art mit der elektrischen Leitung zu versehen. Insbesondere ein dem Verdampfer zugewandter Abschnitt der elektrischen Leitung kann aus dem leitfähigen Klebstoff gebildet sein, und ein dem Verdampfer abgewandter Abschnitt der insbesondere zur Kontaktierung eines externen Teils, beispielsweise eines Energiespeichers, vorgesehen ist kann aus einem von dem leitfähigen Klebstoff verschiedenen Stoff gebildet sein. Vorzugsweise kann der dem Verdampfer abgewandter Abschnitt aus Gold, Kupfer und/oder einem anderen Metall oder einer Legierung daraus gebildet und mit dem aus Klebstoff gebildeten und dem Verdampfer zugewandten Abschnitt der elektrischen Leitung elektrisch leitendend verbunden sein. Der Träger und/oder insbesondere dessen Oberfläche kann vorstrukturiert sein, damit Klebstoff zum Ausbilden der elektrischen Leitung appliziert werden kann.

In einer vorteilhaften Ausführungsform ist im Kontaktbereich zwischen Verdampfer und der elektrischen Leitung eine zusätzliche Metallschicht, beispielsweise auf der Basis von Aluminium, auf den Verdampfer aufgebracht, damit der Verdampfer mit elektrischen Kontaktflächen vorbereitet werden kann, die besonders effektiv in dem Kontaktbereich mit der elektrischen Leitung verbunden werden können. Der Verdampfer kann beispielsweise im Wesentlichen einen insbesondere dotierten Siliziumblock umfassen, der an der Oberfläche die Metallschicht aufweist. Die Metallschicht kann die eutektische Verbindung begünstigen und/oder vereinfacht die elektrische und/oder stoffschlüssige Kontaktierung des Verdampfers mit dem Klebstoff und/oder der elektrischen Leitung. Das Aufbringen der Metallschicht kann durch Abscheidung des Metalls aufs dem insbesondere Silizium umfassenden Verdampfer im Kontaktbereich erfolgen.

Vorzugsweise ist der Träger aus einem keramischen Werkstoff gebildet, um den Träger zur Halterung des Verdampfers thermisch stabil auszubilden und/oder gegebenenfalls eine thermische Kopplung zwischen dem Verdampfer und dem Träger zu minimieren. Der keramische Träger ist chemisch und mechanisch stabil gegenüber den im Betrieb des Verdampfers auftretenden Temperaturen von beispielsweise bis zu 300 °C und thermischen Lastwechseln, die beispielsweise ca. 200 bis 100000-mal im Lebenszyklus des Verdampfers auftreten. Der Träger steht im Kontakt zu der Flüssigkeit und/oder dem Aerosol bzw. Dampf und muss deshalb insbesondere bei den während der Verdampfung auftretenden Temperaturen lebensmitteltauglich bzw. biokompatibel sein, was durch den keramischen Werkstoff begünstigt ist. Der Träger kann mindestens im Bereich des Verdampfers aus einem keramischen Substrat gefertigt sein. Andere nicht den Verdampfer haltende und/oder kontaktierende Abschnitte des Trägers können aus einem anderen Material, beispielsweise aus einem Kunststoff bestehen.

Die Erfindung wird im Folgenden anhand bevorzugter Ausführungsformen unter Bezugnahme auf die beigefügten Figuren erläutert. Dabei zeigt
- Fig. 1: eine schematische Ansicht eines Inhalators;
- Fig. 2: einen perspektivischen Schnitt durch eine Verdampfer-Tank-Einheit;
- Fig. 3: eine schematische perspektive Ansicht eines Verdampfers;
- Fig. 4: eine schematische perspektive Ansicht eines Verdampfers mit einer Metallisierung;
- Fig. 5: eine schematische perspektive Ansicht eines Trägers;
- Fig.6: eine schematische perspektive Ansicht einer Verdampfervorrichtung; und
- Fig. 7: eine schematische perspektive Ansicht eines Trägers in einer weiteren Ausführungsform der Erfindung.

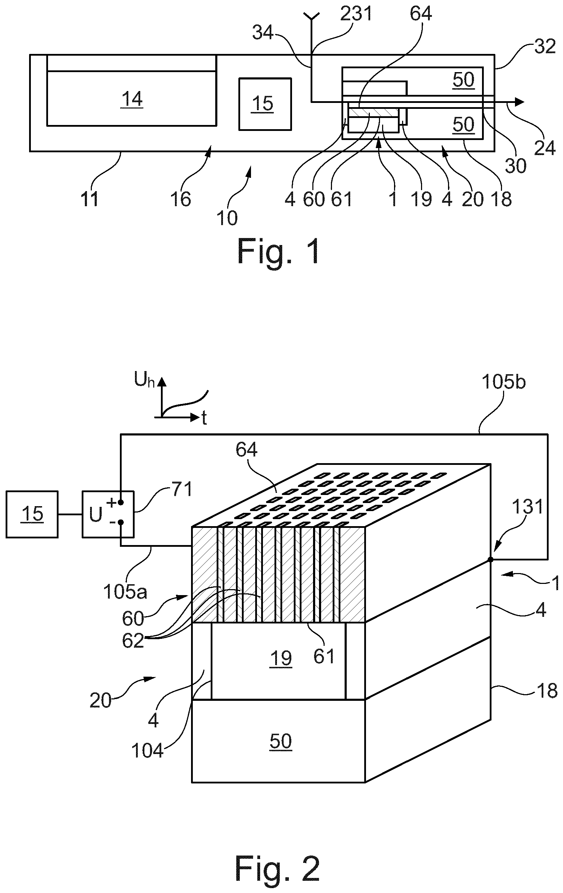

Figur 1 zeigt schematisch einen Inhalator 10 beziehungsweise ein elektronisches Zigarettenprodukt. Der Inhalator 10 umfasst ein Gehäuse 11, in dem ein Luftkanal 30 beziehungsweise Schlot zwischen mindestens einer Lufteinlassöffnung 231 und einer Luftauslassöffnung 24 an einem Mundende 32 des Zigarettenprodukts 10 vorgesehen ist. Das Mundende 32 des Inhalators 10 bezeichnet dabei das Ende, an dem der Konsument zwecks Inhalation zieht, und dadurch den Inhalator 10 mit einem Unterdruck beaufschlagt, und einen Luftstrom 34 in dem Luftkanal 30 erzeugt.

Der Inhalator 10 besteht vorteilhaft aus einem Basisteil 16 und einer Verdampfer-Tank-Einheit 20, die eine Verdampfervorrichtung 1 mit einem Verdampfer 60 und einen Flüssigkeitsspeicher 18 umfasst, und insbesondere in Form einer auswechselbaren Kartusche ausgebildet sein kann. Der Flüssigkeitsspeicher 18 kann von dem Nutzer des Inhalators 10 nachfüllbar sein. Die durch die Lufteinlassöffnung 231 angesaugte Luft wird in dem Luftkanal 30 zu dem mindestens einen Verdampfer 60 geleitet. Der Verdampfer 60 ist mit dem Flüssigkeitsspeicher 18 verbunden oder verbindbar, in dem mindestens eine Flüssigkeit 50 gespeichert ist. Dazu ist vorteilhaft an einer Einlassseite 61 des Verdampfers 60 eine poröse und/oder kapillare, flüssigkeitsleitende Dochtstruktur 19 angeordnet.

Der Verdampfer 60 verdampft Flüssigkeit 50, die dem Verdampfer 60 aus dem Flüssigkeitsspeicher 18 von der Dochtstruktur 19 mittels Kapillarkräften zugeführt wird, und gibt die verdampfte Flüssigkeit als Aerosol/Dampf an einer Auslassseite 64 den Luftstrom 34 zu.

Die elektronische Zigarette 10 umfasst des Weiteren einen elektrischen Energiespeicher 14 und eine elektronische Steuerungsvorrichtung 15. Der Energiespeicher 14 ist in der Regel in dem Basisteil 16 angeordnet und kann insbesondere eine elektrochemische Einweg-Batterie oder ein wiederaufladbarer elektrochemischer Akku, beispielsweise ein Lithium-Ionen-Akku, sein. Die Verdampfer-Tank-Einheit 20 ist zwischen dem Energiespeicher 14 und dem Mundende 32 angeordnet. Die elektronische Steuerungsvorrichtung 15 umfasst mindestens eine digitale Datenverarbeitungseinrichtung, insbesondere Mikroprozessor und/oder Microcontroller, in dem Basisteil 16 (wie in Figur 1 gezeigt) und/oder in der Verdampfer-Tank-Einheit 20.

In dem Gehäuse 11 ist vorteilhaft ein Sensor, beispielsweise ein Drucksensor oder ein Druck- oder Strömungsschalter, angeordnet, wobei die Steuerungsvorrichtung 15 auf der Grundlage eines von dem Sensor ausgegebenen Sensorsignals feststellen kann, dass ein Konsument am Mundende 32 des Zigarettenprodukts 10 zieht, um zu inhalieren. In diesem Fall steuert die Steuerungsvorrichtung 15 den Verdampfer 60 an, um Flüssigkeit 50 aus dem Flüssigkeitsspeicher 18 als Aerosol/Dampf in den Luftstrom 34 zuzugeben.

Der mindestens eine Verdampfer 60 ist in einem dem Mundende 32 abgewandten Teil der Verdampfer-Tank-Einheit 20 angeordnet. Damit sind eine effektive elektrische Kopplung und Ansteuerung des Verdampfers 60 insbesondere mit dem Basisteil 16 möglich. Der Luftstrom 34 führt vorteilhaft durch einen axial durch den Flüssigkeitsspeicher 18 laufenden Luftkanal 30 zu der Luftauslassöffnung 24.

Die in dem Flüssigkeitsspeicher 18 gespeicherte, zu dosierende Flüssigkeit 50 ist beispielsweise eine Mischung aus 1,2-Propylenglykol, Glycerin, Wasser und vorzugsweise mindestens einem Aroma (Flavour) und/oder mindestens einem Wirkstoff, insbesondere Nikotin. Die angegebenen Bestandteile der Flüssigkeit 50 sind jedoch nicht zwingend. Insbesondere kann auf Aroma- und/oder Wirkstoffe, insbesondere Nikotin, verzichtet werden.

In Figur 2 ist ein perspektivischer Schnitt durch eine schematische Verdampfer-Tank-Einheit 20 gezeigt. Die Verdampfer-Tank-Einheit 20 umfasst einen blockförmigen, vorzugsweise monolithischer Heizkörper beziehungsweise Verdampfer 60 vorzugsweise aus einem elektrisch leitenden Material, insbesondere einem Halbleitermaterial vorzugsweise Silizium. Es ist nicht erforderlich, dass der gesamte Verdampfer 60 aus einem elektrisch leitenden Material besteht. Es kann beispielsweise ausreichen, dass die Oberfläche des Verdampfers 60 elektrisch leitend, beispielsweise metallisch, beschichtet oder vorzugsweise geeignet dotiert ist. In diesem Fall muss nicht die gesamte Oberfläche beschichtet sein, beispielsweise können metallische oder vorzugsweise nichtmetallische oder nichtmetallisch kaschierte metallische Leiterbahnen auf einem nichtleitenden beziehungsweise halbleitenden Grundkörper vorgesehen sein. Es ist auch nicht zwingend erforderlich, dass der gesamte Verdampfer 60 heizt; es kann beispielsweise ausreichen, wenn ein Abschnitt oder eine Heizschicht des Verdampfers 60 im Bereich der Austrittsseite 64 heizt. Der Verdampfer 60 wird anhand seines elektrischen Widerstands durch elektrische Energie erwärmt und kann daher als Widerstandsheizer bezeichnet werden.

Der Verdampfer 60 ist vorteilhaft mit einer Mehrzahl von Mikrokanälen beziehungsweise Flüssigkeitskanälen 62 versehen, die eine Einlassseite 61 des Verdampfer 60 mit einer Auslassseite 64 des Verdampfer 60 flüssigkeitsleitend verbinden.

Der mittlere Durchmesser der Flüssigkeitskanäle 62 liegt vorzugsweise im Bereich zwischen 5 µm und 200 µm, weiter vorzugsweise im Bereich zwischen 30 µm und 150 µm, noch weiter vorzugsweise im Bereich zwischen 50 µm und 100 µm. Aufgrund dieser Abmessungen wird vorteilhaft eine Kapillarwirkung erzeugt, so dass an der Einlassseite 61 in einen Flüssigkeitskanal 62 eindringende Flüssigkeit durch den Flüssigkeitskanal 62 nach oben steigt, bis der Flüssigkeitskanal 62 mit Flüssigkeit gefüllt ist. Die Anzahl der Flüssigkeitskanäle 62 liegt vorzugsweise im Bereich zwischen vier und 1000. Auf diese Weise lässt sich der Wärmeeintrag in die Flüssigkeitskanäle 62 optimieren und eine gesicherte hohe Verdampfungsleistung sowie eine ausreichend große Dampfaustrittsfläche realisieren.

Die Flüssigkeitskanäle 62 sind vorteilhaft in Form eines Arrays angeordnet. Das Array kann in Form einer Matrix mit s Spalten und z Zeilen ausgebildet sein, wobei s vorteilhaft im Bereich zwischen 2 und 50 und weiter vorteilhaft im Bereich zwischen 3 und 30 und/oder z vorteilhaft im Bereich zwischen 2 und 50 und weiter vorteilhaft im Bereich zwischen 3 und 30 liegt. Auf diese Weise lässt sich eine effektive und auf einfache Weise herstellbare Anordnung der Flüssigkeitskanäle 62 mit gesichert hoher Verdampfungsleistung realisieren.

Die Verdampfer-Tank-Einheit 20 umfasst einen Träger 4 mit einer Durchgangsöffnung 104 zur flüssigkeitsleitenden Verbindung des Verdampfers 60 und eines Flüssigkeitsspeichers 18. Der Träger 4 und der Verdampfer 60 sind Bestandteile einer Verdampfervorrichtung 1, die die elektrische und mechanische Anbindung des Verdampfers 60 verwirklicht. Für die Versorgung des Verdampfers 60 mit Flüssigkeit 50 ist in der Durchgangsöffnung 104 eine Dochtstruktur 19 angeordnet.

Die Einlassseite 61 des Verdampfers 60 ist über die Dochtstruktur 19 flüssigkeitsleitend mit dem Flüssigkeitsspeicher 18 verbunden. Die Dochtstruktur 19 dient zur passiven Förderung von Flüssigkeit 50 aus dem Flüssigkeitsspeicher 18 zum Verdampfer 60 mittels Kapillarkräften. Die Dochtstruktur 19 kontaktiert die Einlassseite 61 des Verdampfers 60 vorteilhaft flächig und deckt sämtliche Flüssigkeitskanäle 62 des Verdampfers 60 einlassseitig ab. An der dem Verdampfer 60 gegenüberliegenden Seite ist die Dochtstruktur 19 flüssigkeitsleitend mit dem Flüssigkeitsspeicher 18 verbunden.

Ein vorteilhaftes Volumen des Flüssigkeitsspeichers 18 liegt im Bereich zwischen 0,1 ml und 5 ml, vorzugsweise zwischen 0,5 ml und 3 ml, weiter vorzugsweise zwischen 0,7 ml und 2 ml oder 1,5 ml.

Die Verdampfer-Tank-Einheit 20 ist vorzugsweise mit einer von der Steuerungsvorrichtung 15 steuerbaren Heizspannungsquelle 71 verbunden und/oder verbindbar, die über elektrische Leitungen 105a, 105b in einem Kontaktbereich 131 an gegenüberliegenden Randabschnitten des Verdampfers 60 mit diesem verbunden ist, so dass eine von der Heizspannungsquelle 71 erzeugte elektrische Spannung Uh zu einem Stromfluss durch den Verdampfer 60 führt. Aufgrund des ohmschen Widerstands des elektrisch leitenden Verdampfers 60 führt der Stromfluss zu einer Erhitzung des Verdampfers 60 und daher zu einer Verdampfung von in den Flüssigkeitskanälen 62 enthaltener Flüssigkeit. Auf diese Weise erzeugter Dampf/Aerosol entweicht zur Auslassseite 64 aus den Flüssigkeitskanälen 62 und wird dem Luftstrom 34 beigemischt. Genauer steuert bei Feststellung eines durch Ziehen des Konsumenten verursachten Luftstroms 34 durch den Luftkanal 30 die Steuerungsvorrichtung 15 die Heizspannungsquelle 71 an, wobei durch spontane Erhitzung die in den Flüssigkeitskanälen 62 befindliche Flüssigkeit in Form von Dampf/Aerosol aus den Flüssigkeitskanälen 62 getrieben wird.

Die Verdampfungstemperatur liegt vorzugsweise im Bereich zwischen 100 °C und 400 °C, weiter bevorzugt zwischen 150 °C und 350 °C, noch weiter bevorzugt zwischen 190 °C und 290 °C.

Der Verdampfer 60 kann vorteilhaft aus Teilstücken eines Wafers mit Dünnfilmschichttechnologie hergestellt werden, welcher eine Schichtdicke von vorzugsweise kleiner oder gleich 1000 µm, weiter vorzugsweise 750 µm, noch weiter vorzugsweise kleiner oder gleich 500 µm aufweist. Oberflächen des Verdampfers 60 können vorteilhaft hydrophil sein.

Die Verdampfer-Tank-Einheit 20 ist so eingestellt, dass eine Flüssigkeitsmenge vorzugsweise im Bereich zwischen 1 µl und 20 µl, weiter vorzugsweise zwischen 2 µl und 10 µl, noch weiter vorzugsweise zwischen 3 µl und 5 µl, typischerweise 4 µl pro Zug des Konsumenten, zudosiert wird. Vorzugsweise kann die Verdampfer-Tank-Einheit hinsichtlich der Flüssigkeits-/Dampfmenge pro Zug, d.h. je Zugdauer von 1 s bis 3 s, einstellbar sein.

Die von der Heizspannungsquelle 71 erzeugte Ansteuerfrequenz des Verdampfers 60 liegt im Allgemeinen vorteilhaft im Bereich von 1 Hz bis 50 kHz, bevorzugt im Bereich von 30 Hz bis 30 kHz, noch weiter vorteilhaft im Bereich von 100 Hz bis 25 kHz.

Der Verdampfer 60 ist vorzugsweise auf der Grundlage von MEMS-Technologie, insbesondere aus Silizium, gefertigt und daher vorteilhaft ein Mikro-Elektro-Mechanisches System.

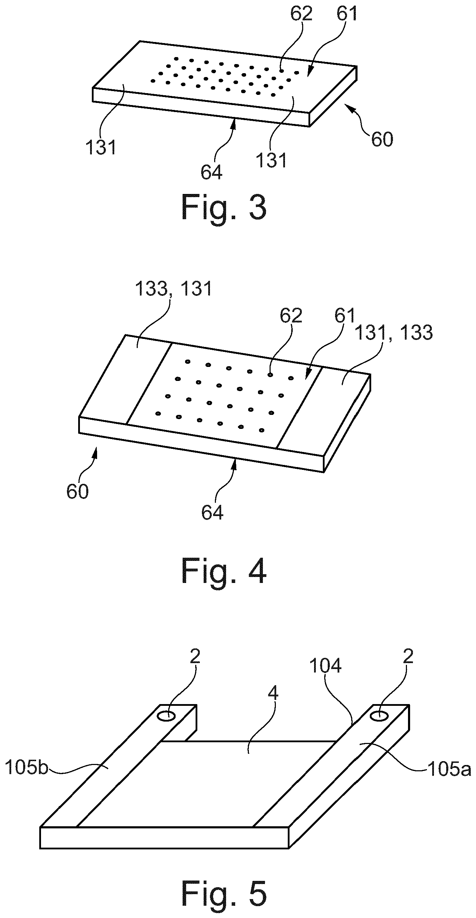

Figur 3 zeigt eine schematische perspektive Ansicht eines Verdampfers 60. Der Verdampfer 60 weist eine Einlassseite 61 und eine Auslassseite 64 auf. Zwischen der Einlassseite 61 und der Auslassseite 64 erstrecken sich mehrere Flüssigkeitskanäle 62. Die Flüssigkeitskanäle 62 sind vorteilhaft zwischen voneinander beabstandeten Randabschnitten des Verdampfers 60 angeordnet, in denen Kontaktbereiche 131 insbesondere zur elektrischen und/oder mechanischen Kontaktierung des Verdampfers 60 vorgesehen sind. Der Verdampfer 60 ist blockförmig bzw. quaderförmig und die Flüssigkeitskanäle 62 sind somit zwischen zwei Kontaktbereichen 131 angeordnet, die auf einer der Seiten des quaderförmigen Verdampfers 60 vorgesehen sind und die die Randabschnitte bilden. Die Kontaktbereich 131 sind in diesem Beispiel in Randabschnitten auf der Einlassseite 61 vorgesehen. Damit kann der Verdampfer 60 auf der Einlassseite 61 mit einem Träger 4 verbunden werden und/oder eine elektrische Verbindung zu einer elektrischen Leitung 105a, 105b herstellen. In anderen Ausführungsbeispiel können die Kontaktbereiche 131 jedoch auch auf einer anderen Seite des Verdampfers 60, insbesondere auf der der Einlassseite 61 in diesem Beispiel gegenüberliegenden Auslassseite 64 vorgesehen sein. Es ist auch denkbar, Kontaktbereiche 131 auf einer oder mehreren Seiten senkrecht zur Einlassseite 61 und/oder zur Auslassseite 64 vorzusehen.

Figur 4 zeigt eine schematische perspektive Ansicht eines Verdampfers 60 mit einer Metallisierung 133. Die in Figur 4 gezeigt Ausführungsform wird mit Hinblick auf die in Figur 3 gezeigt Ausführungsform erläutert. In den Kontaktbereich 131 weist der Verdampfer eine Metallschicht 133 auf, um die Verbindung zu einem in Figur 4 nicht gezeigten Klebstoff 2 zu verbessern, die elektrische Leitfähigkeit dem Kontaktbereich 131 zu erhöhen und/oder eine in einem späteren Verfahrensschritt zu bildende eutektische Verbindung zu begünstigen. Die Metallschicht 133 kann im Herstellungsprozess auf die Oberfläche des Verdampfers 60 abgeschieden werden. Damit kann die elektrische Verbindung zwischen dem Verdampfer 60 und einer elektrischen Leitung 105a, 105b niederohmiger und effektiver reproduzierbar herstellbar werden.

Figur 5 zeigt eine schematische perspektive Ansicht eines Trägers 4. Auf dem Träger 4 sind elektrische Leitungen 105a, 105b angeordnet. Die elektrischen Leitungen 105a, 105b sind so angeordnet, dass der Verdampfer 60 im montierten Zustand in den Kontaktbereichen 131 mit den elektrischen Leitungen 105a, 105b verbunden ist. In diesem Ausführungsbeispiel sind die elektrischen Leitungen 105a, 105b auf dem Träger 4 angeordnet. In anderen Ausführungsbeispielen können die elektrischen Leitungen 105a, 105b jedoch auch wenigstens teilweise im Innern des Trägers 4 verlaufen, wobei die elektrischen Leitungen 105a, 105b dabei in zur Kontaktierung des Verdampfers 60 vorgesehenen Abschnitten an der Oberfläche des Trägers 4 angeordnet sein müssen.

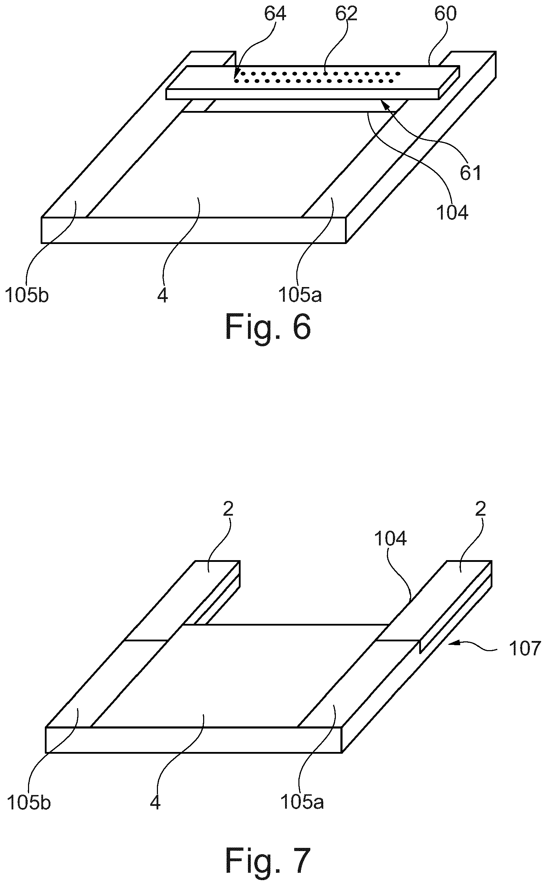

In dem in Figur 5 gezeigten Beispiel ist auf beiden elektrischen Leitungen 105a, 105b Klebstoff 2 aufgebracht. Die elektrischen Leitungen 105a, 105b sind in diesem Beispiel auf der Oberfläche des Trägers 4 vorgesehen. Somit ist der Klebstoff 2 im montierten Zustand (siehe Figur 6) zwischen dem Träger 4 und dem Verdampfer 60 angeordnet. Der Klebstoff 2 ist so auf den elektrischen Leitungen 105a, 105b angeordnet, dass der Verdampfer 60 in dem Kontaktbereich 131 mit den elektrischen Leitungen 105a, 105b durch den Klebstoff 2 verbunden werden kann. Der Abstand zwischen den Orten, an denen Klebstoff 2 auf den Träger 4 appliziert ist, entspricht dem Abstand der Kontaktbereiche 131 des Verdampfers 60.

In diesem Ausführungsbeispiel ist zwischen den elektrischen Leitungen 105a, 105b und insbesondere dem Träger 4 eine Durchgangsöffnung 104 vorgesehen, welche es ermöglicht, dass insbesondere die Einlassseite 61 des Verdampfers 60 flüssigkeitsleitend von einer Dochtstruktur 19 kontaktiert werden kann.

Der Klebstoff kann insbesondere ein silbergefüllter einkomponentiger Polyimidklebstoff, beispielsweise vom Typ Panacol Ecolite 237 sein. Klebstoffe mit anderen Kunststoffen sowie eine Füllung mit einem anderen Metall sind jedoch auch denkbar.

Die elektrischen Leitungen 105a, 105b können auf den Träger 4 aufbracht werden oder der Träger 4 kann bereits mit auf dem Träger 4 vorstrukturierten elektrischen Leitungen 105a, 105b vorgesehen sein. Die vorteilhaft vorstrukturierten elektrischen Leitungen 105a, 105b können aus verschiedenen Materialien oder Schichtkombination verschiedener Materialien bestehen, um temperaturstabil, reaktionsträge, drahtbondbar und/oder lötbar zu sein. Bevorzugt werden elektrische Leitungen 105a, 105b aus Gold verwendet.

insbesondere im Bereich der Durchgangsöffnung 104 und/oder in den Abschnitten des Trägers 4, die den Verdampfer 60 kontaktieren oder die durch den Verdampfer 60 im Betrieb erwärmt werden, kann der Träger 4 aus einem keramischen Substrat gefertigt sein.

Figur 6 zeigt eine schematische perspektive Ansicht einer Verdampfervorrichtung 1, umfassend den mit Bezug zu Figur 5 erläuterten Träger 4 und den mit Bezug zu Figur 3 oder 4 erläuterten Verdampfer 60.

Die elektrischen Leitungen 105a, 105b sind durch den elektrisch leitfähigen Klebstoff 2 mit dem Verdampfer 60 elektrisch leitend verbunden.

Ein zusätzlicher Ausheizschritt schafft dafür die eutektische Verbindung, um die elektrische Verbindung zwischen dem Verdampfer 60 und den elektrischen Leitungen 105a, 105b niederohmig zu machen.

Beispielhaft ist ein siliziumhaltiger Verdampfer 60 und ein silberhaltiger Klebstoff 2 vorgesehen. Dem Fachmann ist bekannt, dass Silber und Silizium ein Phasendiagramm mit einem Eutektischen Punkt bei einer Temperatur von etwa 845 °C und einem Silbergehalt von etwa 89 Atom-% beziehungsweise 89 Teilchenanzahl-% aufweist, was etwa einem Silbergehalt von 97 Gewichts-% entspricht. Mithin muss der zusätzliche Ausheizschritt den Klebstoff 2 auf die dem eutektischen Punkt entsprechende Temperatur erhitzen, um die eutektische Verbindung zwischen dem Verdampfer 60 und dem Klebstoff 2 herzustellen.

Figur 7 zeigt eine schematische perspektive Ansicht eines Trägers 4 in einer weiteren Ausführungsform der Erfindung, bei der die elektrischen Leitungen 105a, 105b teilweise von dem leitfähigen Klebstoff 2 gebildet sind. Der Träger 4 kann vorstrukturiert sein, indem der Träger 4 eine oder mehrere Vertiefungen 107 aufweist, in die Klebstoff 4 zum Ausbilden der elektrischen Leitungen 105a, 105b appliziert werden kann. Die Vertiefung 107 wird mit Klebstoff 2 gefüllt und anschließend kann der Verdampfer 60 auf den Klebstoff 2 aufgesetzt werden. Die Vertiefung 107 kann die Halterung des Verdampfers 60 begünstigen. Der Klebstoff 2 in der Vertiefung 107 bildet den Verdampfer 60 kontaktierende Abschnitte der elektrischen Leitungen 105a, 105b und ist mit den Verdampfer 60 abgewandten beziehungsweise den Verdampfer 60 nicht kontaktierenden Abschnitten der elektrischen Leitungen 105a, 105b elektrisch leitend verbunden. Die den Verdampfer 60 nicht kontaktierenden Abschnitte der elektrischen Leitungen 105a, 105b können insbesondere über den Träger 4 hinaus ragen, um beispielsweise eine Kontaktierung und/oder einen Stecker zur elektrischen Verbindung der Verdampfervorrichtung 1 mit einem externen Teil bereitzustellen (nicht gezeigt).

Die Vorstrukturierung des Trägers 4 kann in anderen Ausführungsformen eine Oberflächenbehandlung umfassen, damit der Klebstoff 2 eine bessere Verbindung mit dem Träger 4 und/oder der elektrischen Leitung 105a, 105b eingeht. In dieser Ausführungsform kann eine Vertiefung 107 entbehrlich sein.

### Bezugszeichenliste:

- 1: Verdampfervorrichtung
- 2: Klebstoff
- 4: Träger
- 10: Inhalator
- 11: Gehäuse
- 14: Energiespeicher
- 15: Steuerungsvorrichtung
- 16: Basisteil
- 18: Flüssigkeitsspeicher
- 19: Dochtstruktur
- 20: Verdampfer-Tank-Einheit
- 24: Luftauslassöffnung
- 30: Luftkanal
- 32: Mundende
- 34: Luftstrom
- 50: Flüssigkeit
- 60: Verdampfer
- 61: Einlassseite
- 62: Flüssigkeitskanal
- 64: Auslassseite
- 71: Heizspannungsquelle
- 104: Durchgangsöffnung
- 105a, 105b: elektrische Leitung
- 107: Vertiefung
- 131: Kontaktbereich
- 133: Metallschicht
- 231: Lufteinlassöffnung

## Patentansprüche

1. Verfahren zur Herstellung einer Verdampfervorrichtung (1) für einen Inhalator (10), vorzugsweise für ein elektronisches Zigarettenprodukt, mit mindestens einem elektrischen, siliziumhaltigen Verdampfer (60), wenigstens einer elektrischen Leitung (105a, 105b) zur Versorgung des Verdampfers (60) mit elektrischem Strom, und einem Träger (4) zum Tragen des Verdampfers (60), wobei
- ein elektrisch leitfähiger Klebstoff (2) zwischen dem Verdampfer (60) und dem Träger (4) aufgebracht wird, um eine elektrische Verbindung des Verdampfers (60) mit der elektrischen Leitung (105a, 105b) herzustellen, wobei der Klebstoff (2) Metall beinhaltet, wobei
- ein zusätzlicher Ausheizschritt zur Schaffung einer eutektischen Verbindung zwischen dem Verdampfer (60) und dem Klebstoff (2) durchgeführt wird,
**dadurch gekennzeichnet, dass** der Klebstoff (2) eine kunststoffhaltige Klebstoffbasis beinhaltet.

2. Verfahren nach Anspruch 1, **dadurch gekennzeichnet, dass**
- der zusätzliche Ausheizschritt bei einer Temperatur von mindestens 400 °C, vorzugsweise mindestens 550 °C, weiter vorzugsweise mindestens 700 °C durchgeführt wird.

3. Verfahren nach einem der vorangehenden Ansprüche, **dadurch gekennzeichnet, dass**
- vor dem zusätzlichen Ausheizschritt eine thermische Aushärtung des Klebstoffs (2) für mindestens 30 Minuten, vorzugsweise mindestens 60 Minuten und/oder bei einer Temperatur im Bereich zwischen 150 °C und 290 °C erfolgt.

4. Verdampfervorrichtung (1) für einen Inhalator (10), vorzugsweise für ein elektronisches Zigarettenprodukt, umfassend
- mindestens einen elektrischen, siliziumhaltigen Verdampfer (60) zum Verdampfen von dem Verdampfer (60) zugeführter Flüssigkeit (50),
- wenigstens eine elektrische Leitung (105a, 105b) zur Versorgung des Verdampfers (60) mit elektrischem Strom, und
- einen Träger (4), der den Verdampfer (60) hält und in oder auf dem die elektrische Leitung (105a, 105b) angeordnet ist, wobei
- ein elektrisch leitfähiger Klebstoff (2) zwischen dem Verdampfer (60) und dem Träger (4) vorgesehen ist, der eine elektrische Verbindung des Verdampfers (60) mit der elektrischen Leitung (105a, 105b) herstellt, wobei der Klebstoff (2) Metall beinhaltet, wobei
- zwischen dem Verdampfer (60) und dem Klebstoff (2) eine eutektische Verbindung gebildet ist,
**dadurch gekennzeichnet, dass** der Klebstoff (2) eine kunststoffhaltige Klebstoffbasis beinhaltet.

5. Verdampfervorrichtung (1) nach Anspruch 4, **dadurch gekennzeichnet, dass**
- der Klebstoff (2) Silber beinhaltet.

6. Verdampfervorrichtung (1) nach einem der Ansprüche 4 oder 5, **dadurch gekennzeichnet, dass**
- die eutektische Verbindung mehr als 50 Gewichts-%, vorteilhaft mehr als 65 Gewichts-%, noch weiter vorteilhaft mehr als 80 Gewichts-% Metall aufweist.

7. Verdampfervorrichtung (1) nach einem der Ansprüche 4 bis 6, **dadurch gekennzeichnet, dass**
- die elektrische Leitung (105a, 105b) wenigstens teilweise von dem leitfähigen Klebstoff (2) gebildet ist.

8. Verdampfervorrichtung (1) nach einem der Ansprüche 4 bis 7, **dadurch gekennzeichnet, dass**
- im Kontaktbereich (131) zwischen Verdampfer (60) und der elektrischen Leitung (105a, 105b) eine zusätzliche Metallschicht (133), beispielsweise auf der Basis von Aluminium, auf den Verdampfer (60) aufgebracht ist.

9. Verdampfervorrichtung (1) nach einem der Ansprüche 4 bis 8, **dadurch gekennzeichnet, dass**
- der Träger (4) aus einem keramischen Werkstoff gebildet ist.

10. Inhalator (10), insbesondere elektronisches Zigarettenprodukt, umfassend eine Verdampfervorrichtung (1) nach einem der Ansprüche 4 bis 9.

## Claims

1. Method for manufacturing a vaporizer device (1) for an inhaler (10), preferably for an electronic cigarette product, comprising at least one electric vaporizer (60), at least one electrical line (105a, 105b) for supplying the vaporizer (60) with electric current, and a carrier (4) for supporting the vaporizer (60), wherein
- an electrically conductive adhesive (2) is applied between the vaporizer (60) and the carrier (4) to form an electrical connection of the vaporizer (60) to the electrical line (105a, 105b), wherein the adhesive (2) contains metal, wherein
- an additional heating step is carried out to form a eutectic connection between the vaporizer (60) and the adhesive (2), **characterized in that** the adhesive (2) comprises an adhesive basis containing a polymer.

2. Method according to claim 1, **characterized in that**
- the additional heating step is carried out at a temperature of at least 400 °C, preferably at least 550 °C, further preferably at least 700 °C.

3. Method according to one of the preceding claims, **characterized in that**
- prior to the additional heating step, thermal curing of the adhesive (2) is carried out for at least 30 minutes, preferably at least 60 minutes and/or at a temperature in the range between 150 °C and 290 °C.

4. Vaporizer device (1) for an inhaler (10), preferably for an electronic cigarette product, comprising
- at least one electric vaporizer (60) for vaporizing liquid (50) fed to the vaporizer (60),
- at least one electrical line (105a, 105b) for supplying the vaporizer (60) with electrical current, and
- a carrier (4) which holds the vaporizer (60) and in or on which the electrical line (105a, 105b) is arranged, **characterized in that**
- an electrically conductive adhesive (2) is provided between the vaporizer (60) and the carrier (4), which forms an electrical connection of the vaporizer (60) to the electrical line (105a, 105b), wherein the adhesive (2) contains metal, wherein
- a eutectic connection is formed between the vaporizer (60) and the adhesive (2),
**characterized in that** the adhesive (2) comprises an adhesive basis containing a polymer.

5. Vaporizer device (1) according to claim 4, **characterized in that**
- the adhesive (2) contains silver.

6. Vaporizer device (1) according to one of claims 4 or 5, **characterized in that**
- the eutectic connection comprises more than 50% by weight, advantageously more than 65% by weight, still further advantageously more than 80% by weight metal.

7. Vaporizer device (1) according to one of claims 4 to 6, **characterized in that**
- the electrical line (105a, 105b) is at least partially formed of the conductive adhesive (2).

8. Vaporizer device (1) according to one of claims 4 to 7, **characterized in that**
- an additional metal layer (133), for example based on aluminum, is applied to the vaporizer (60) in the contact area (131) between the vaporizer (60) and the electrical line (105a, 105b).

9. Vaporizer device (1) according to one of claims 4 to 8, **characterized in that**
- the carrier (4) is formed of a ceramic material.

10. Inhaler (10), in particular electronic cigarette product, comprising a vaporizer device (1) according to any one of claims 4 to 9.

## Revendications

1. Procédé de fabrication d'un dispositif évaporateur (1) pour un inhalateur (10), de préférence pour un produit de cigarette électronique, comportant au moins un évaporateur électrique (60) contenant du silicium, au moins un conduit électrique (105a, 105b) pour alimenter l'évaporateur (60) en courant électrique, et un support (4) pour supporter l'évaporateur (60),
- dans lequel un adhésif électriquement conducteur (2) est appliqué entre l'évaporateur (60) et le support (4) pour établir une liaison électrique de l'évaporateur (60) avec le conduit électrique (105a, 105b), dans lequel l'adhésif (2) contient un métal,
- dans lequel une étape de chauffage supplémentaire est réalisée pour créer une liaison eutectique entre l'évaporateur (60) et l'adhésif (2),
**caractérisé en ce que** l'adhésif (2) contient une base adhésive contenant de la matière plastique.

2. Procédé selon la revendication 1, **caractérisé en ce que**
- l'étape de chauffage supplémentaire est réalisée à une température d'au moins 400 °C, de manière préférée d'au moins 550 °C, de manière plus préférée d'au moins 700 °C.

3. Procédé selon l'une des revendications précédentes, **caractérisé en ce que**
- avant l'étape de chauffage supplémentaire, l'adhésif (2) est soumis à un durcissement thermique pendant au moins 30 minutes, de préférence pendant au moins 60 minutes et/ou à une température située dans la plage comprise entre 150 °C et 290 °C.

4. Dispositif évaporateur (1) pour un inhalateur (10), de préférence pour une cigarette électronique, comprenant :
- au moins un évaporateur électrique (60) contenant du silicium pour évaporer du liquide (50) acheminé par l'évaporateur (60),
- au moins un conduit électrique (105a, 105b) pour alimenter l'évaporateur (60) en courant électrique, et
- un support (4) qui maintient l'évaporateur (60) et dans ou sur lequel le conduit électrique (105a, 105b) est disposé,
- dans lequel un adhésif électriquement conducteur (2) est prévu entre l'évaporateur (60) et le support (4), lequel adhésif établit une liaison électrique de l'évaporateur (60) avec le conduit électrique (105a, 105b), dans lequel l'adhésif (2) contient du métal,
- dans lequel une liaison eutectique est formée entre l'évaporateur (60) et l'adhésif (2),
**caractérisé en ce que** l'adhésif (2) contient une base adhésive contenant de la matière plastique.

5. Dispositif évaporateur (1) selon la revendication 4, **caractérisé en ce que**
- l'adhésif (2) contient de l'argent.

6. Dispositif évaporateur (1) selon l'une des revendications 4 ou 5, **caractérisé en ce que**
- la liaison eutectique comporte plus de 50 % en poids, de manière avantageuse plus de 65 % en poids, de manière encore plus avantageuse plus de 80 % en poids de métal.

7. Dispositif évaporateur (1) selon l'une des revendications 4 à 6, **caractérisé en ce que**
- le conduit électrique (105a, 105b) est au moins en partie formé par l'adhésif conducteur (2).

8. Dispositif évaporateur (1) selon l'une des revendications 4 à 7, **caractérisé en ce que**
- une couche de métal supplémentaire (133), par exemple à base d'aluminium, est appliquée sur l'évaporateur (60), dans la zone de contact (131) entre l'évaporateur (60) et le conduit électrique (105a, 105b).

9. Dispositif évaporateur (1) selon l'une des revendications 4 à 8, **caractérisé en ce que**
- le support (4) est formé à partir d'un matériau céramique.

10. Inhalateur (10), en particulier cigarette électronique, comprenant un dispositif évaporateur (1) selon l'une des revendications 4 à 9.
